# EUROPÄISCHE PATENTANMELDUNG

(11) **EP 0 981 962 A2**
(43) Veröffentlichungstag der Anmeldung: **01.03.2000**
(21) Anmeldenummer: 99114638.2
(22) Anmeldetag: 27.07.1999
(51) Int. Cl.: A21C 9/04

(54) **Vorrichtung zum Aufbringen eines Produktes**

(30) Priorität: 27.08.1998 DE 19838891
(71) Anmelder: Dieter Sönnichsen Maschinen-und Stahlbau GmbH, 25712 Burg (DE)
(72) Erfinder: Sönnichsen, Dieter, 25712 Burg (DE)
(74) Vertreter: Trappenberg, Hans

(57) **Zusammenfassung**

Eine Vorrichtung zum Aufbringen eines ersten Produkts auf ein zweites Produkt weist wenigstens einen das erste Produkt enthaltenden Behälter 1 auf, welcher wenigstens eine Öffnung 2 zur Abgabe des ersten Produkts hat. Es sind Elemente vorgesehen, welche jeweils eine Abgabeöffnung 2 für das erste Produkt aufweisen. Die Abgabeöffnungen 2 sind in Form einer Matrix nebeneinander angeordnet.

## Beschreibung

Die Erfindung betrifft eine Vorrichtung zum Aufbringen eines ersten Produkts auf ein zweites Produkt nach dem Oberbegriff des Anspruchs 1, mit wenigstens einem das erste Produkt enthaltenden Behälter, welcher wenigstens eine Öffnung zur Abgabe des ersten Produkts aufweist.

Derartige Vorrichtungen werden überwiegend bei der industriellen Herstellung von Pizzen zur Aufbringung von Tomatensoße auf den Pizzaboden verwendet. Hierbei wird die Tomatensoße in der Mitte des Pizzabodens aufgebracht und danach mittels eines löffelförmigen Gegenstandes auf dem Pizzaboden verteilt.

Der Behälter faßt in der Regel eine größere Menge Tomatensoße und weist unten nach Art eines Trichters eine kleine Öffnung auf, welche verschließbar ist. Durch die Öffnung wird die Tomatensoße auf den Pizzaboden geträufelt. Entsprechend der Menge der benötigten Tomatensoße wird die Öffnung eine Zeit lang geöffnet.

Da die Tomatensoße nach dem Aufbringen auf den Pizzaboden verteilt werden muß, ist eine besondere mechanische Vorrichtung erforderlich. Hierdurch bedingt ist der Aufwand bei der Herstellung der Vorrichtung zum Aufbringen von Tomatensoße auf Pizzaböden entsprechend groß.

Des weiteren läßt sich mit der bekannten Vorrichtung die Tomatensoße nicht sehr exakt verteilen. Die Tomatensoße kann nicht sehr gleichmäßig auf den Pizzaboden aufgebracht werden. Sie weist hinsichtlich der Dicke und des Ortes Ungleichmäßigkeiten auf.

Da bei der bekannten Vorrichtung die Verteilung der Tomatensoße auf dem Pizzaboden derart geschieht, daß der Löffel um eine Achse gedreht wird, lassen sich mit der bekannten Vorrichtung nur kreisrunde Pizzaböden mit Tomatensoße bestreichen. Sollten beispielsweise rechteckige Pizzaböden mit Tomatensoße bestrichen werden, ließe sich das mit der bekannten Vorrichtung nicht bewerkstelligen.

Es ist Aufgabe der Erfindung eine eingangs genannte Vorrichtung derart auszubilden, daß ein erstes Produkt auf ein zweites Produkt beliebiger Form aufbringbar ist, wobei eine gleichmäßige Verteilung des ersten Produkts gewährleistet ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung sind Elemente vorgesehen, welche eine Abgabeöffnung für das erste Produkt aufweisen, welche in Form einer Matrix nebeneinander angeordnet sind. Dadurch, daß die Abgabeöffnungen in Form einer Matrix nebeneinander angeordnet sind, läßt sich das erste Produkt an beliebigen Stellen auf das zweite Produkt aufbringen. Ähnlich wie bei einem Matrixdrucker zur Erzeugung des Druckbildes nadelförmige Stifte betätigt werden, werden entsprechend der Form, in der das erste Produkt auf das zweite Produkt aufgebracht werden soll, die entsprechenden Abgabeöffnungen geöffnet. Soll das erste Produkt beispielsweise in einer Linie auf das zweite Produkt aufgebracht werden, werden nur die entsprechenden nebeneinanderliegenden Abgabeöffnungen geöffnet. Soll eine rechteckige Fläche mit dem ersten Produkt versehen werden, werden entsprechend alle Abgabeöffnungen geöffnet oder ein entsprechend kleineres rechteckiges Feld von Abgabeöffnungen.

Mit der erfindungsgemäßen Vorrichtung ist es in gleicher Weise wie bei einem Matrixdrucker möglich das erste Produkt in beliebigen Formen und Zeichen auf das zweite Produkt aufzubringen. So könnte beispielsweise das erste Produkt in Form eines Wortes auf das zweite Produkt aufgebracht werden. Hierzu wäre es lediglich erforderlich, die Abgabeöffnungen mit steuerbaren Verschlußelementen zu versehen, welche beispielsweise von einem Rechner gesteuert werden. Durch die individuelle Steuerung der Abgabeöffnungen ist es auch möglich, die Menge des abgegebenen ersten Produkts zu steuern, so daß auch die Dicke des ersten Produkts auf dem zweiten Produkt einstellbar ist.

Bei einer besonderen Ausführungsform der Erfindung sind die Elemente rohrförmig ausgebildete Behälter. Hierbei ist es von besonderem Vorteil, wenn die Behälter an ihren den Abgabeöffnungen abgewandten Enden mit einem Unterdruck beaufschlagbar sind. Dies kann in vorteilhafter Weise mittels Kolbenpumpen geschehen, mit denen die Behälter an ihren den Abgabeöffnungen abgewandten Enden verbunden sind.

Die rohrförmigen Behälter lassen sich in einfacher Weise zu einer Matrix zusammenfassen. Um eine möglichst gleichmäßige Verteilung beziehungsweise genaue Aufbringung des ersten Produkts auf dem zweiten Produkt zu erreichen, sollten die rohrförmigen Behälter einen nicht zu großen Querschnitt aufweisen, da hierdurch pro Flächeneinheit viele Behälter angeordnet werden können, wodurch die Matrix feiner wird.

Zur Füllung der rohrförmigen Behälter mit dem ersten Produkt werden diese in einen Vorratsbehälter getaucht, und anschließend mittels der Kolbenpumpen an ihren den Abgabeöffnungen abgewandten Enden mit einem Unterdruck beaufschlagt. Hierdurch wird von den rohrförmigen Behältern das erste Produkt aufgenommen. Nachdem die rohrförmigen Behälter das erste Produkt aufgenommen haben, wird die aus den rohrförmigen Behältern bestehende Matrize über das zweite Produkt gebracht, wonach dann der Unterdruck aufgehoben wird und das erste Produkt von den rohrförmigen Behältern abgegeben wird und auf das zweite Produkt gelangt. Mittels der Kolbenpumpen läßt sich das erste Produkt auch mit Druck aus den Behältern auf das zweite Produkt bringen. Dies wirkt sich sehr vorteilhaft auf eine gleichmäßig Verteilung des ersten Produkts aus.

Bei einer weiteren besonderen Ausführungsform der Erfindung ist eine Tüllenplatte vorgesehen, an der die Behälter mit ihren den Abgabeöffnungen abgewandten Enden befestigt sind. In besonders vorteilhafter Weise sind die Behälter mit der Tüllenplatte lösbar verbunden. Die Behälter können beispielsweise in die Tüllenplatte geschraubt sein. Hierdurch lassen sich entsprechend der Form, in der das erste Produkt auf das zweite Produkt aufgebracht werden soll, auf einfache Weise Behälter an der Tüllenplatte befestigen.

Bei einer besonders vorteilhaften Ausführungsform der Erfindung sind die Kolbenpumpen an der den Behältern abgewandten Seite über eine Dichtung mit der Tüllenplatte verbunden. Hierbei ist es besonders günstig, die Kolbenpumpen als Bohrungen in einer Kolbenplatte auszubilden, in denen Kolben mit einer Kolbenstange angeordnet sind. Eine derartige Ausführung gestattet es zum einen auf engstem Raum sehr viele Kolbenpumpen anzuordnen, wodurch eine sehr feine Matrix erreicht wird, und zum anderen ist der Aufbau sehr robust, was sich besonders günstig auf die Zuverlässigkeit der Vorrichtung auswirkt. Des weiteren lassen sich die Kolbenpumpen auf sehr einfache Weise zuverlässig mit den Behältern verbinden.

Bei einer weiteren Ausführungsform der Erfindung ist vorgesehen, daß die Kolbenstangen an ihren den Kolben abgewandten Enden mit einer Mitnehmerplatte verbunden sind. Die Mitnehmerplatte ist andererseits mit einem Linearantrieb verbunden. Hierdurch lassen sich mittels des Linearantriebs alle Kolben gleichzeitig bewegen. Da jedoch die Tüllenplatte nicht vollständig mit rohrförmigen Behältern bestückt sein braucht, hat die Bewegung der Kolben der Kolbenpumpen, unter welchen sich kein rohrförmiger Behälter befindet, keine Auswirkungen. Die Verbindung der Kolbenstangen aller Kolben mit der Mitnehmerplatte hat jedoch den Vorteil, daß die Anordnung sehr robust und einfach ausgebildet werden kann.
Bei einer weiteren vorteilhaften Ausführungsform der Erfindung ist eine Abstreiferplatte vorgesehen, welche Öffnungen aufweist, durch welche sich die rohrförmigen Behälter erstrecken. Werden die rohrförmigen Behälter in den Vorratsbehälter des ersten Produkts eingetaucht, bleibt an den Außenwänden der rohrförmigen Behälter beim Herausziehen erstes Produkt haften. Da dies nicht vom Unterdruck festgehalten wird, kann es beim Bewegen der Matrix über dem zweiten Produkt unkontrolliert auf das zweite Produkt tropfen. Dadurch, daß sich die Behälter durch die Öffnungen in der Abstreiferplatte erstrecken, welche geringfügig größer als die Behälter sind, wird das außen an den Behältern haftende erste Produkt abgestreift.

Als besonders vorteilhaft hat sich auf eine Ausführungsform der Erfindung herausgestellt, bei der mehrere Elemente zu einem Dosierkopf zusammengefaßt sind und die Vorrichtung mehrere Dosierköpfe aufweist. Die Dosierköpfe können ohne Lücke nebeneinander angeordnet werden. Hierdurch läßt sich auf einfache Weise erreichen, daß eine sehr große Fläche mit dem ersten Produkt versehen werden kann, wobei durch die Aufteilung auf mehrere Dosierköpfe die Gesamtvorrichtung einfach herstellbar und montierbar ist. Besonders vorteilhaft ist eine derartige Ausführungsform im Hinblick auf eine spätere Wartung. Darüber hinaus besteht die Möglichkeit, die Dosierköpfe entsprechend der Geometrie des zweiten Produktes und der Fördergeschwindigkeit, mit der das zweite Produkt unter den Dosierköpfen gefördert wird, anzuordnen.

Wenngleich die erfindungsgemäße Vorrichtung auch überwiegend zur Aufbringung von Tomatensoße auf Pizzaböden verwendet werden dürfte, so beschränkt sich deren Anwendungsbereich jedoch nicht auf diesen Fall. Mittels der erfindungsgemäßen Vorrichtung läßt sich jedes beliebige flüssige oder pastenförmige Produkt auf ein zweites Produkt aufbringen. So könnte beispielsweise mittels der erfindungsgemäßen Vorrichtung Zuckerguß oder Schokoladensoße in Form eines Schriftzugs auf einen Tortenboden oder Kuchen aufgebracht werden. Beispielsweise ließen sich Kuchen so mit einem Namen oder einem Geburtstag versehen.

Die erfindungsgemäße Vorrichtung hat darüber hinaus den Vorteil, daß sie äußerst unanfällig gegen Verstopfen ist, wie dies beispielsweise durch feste Stücke beispielsweise in Tomatensoße hervorgerufen werden könnte.

Weitere Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: einen erfindungsgemäßen Dosierkopf, in schematischer Darstellung
- Figur 2: den in Fig. 1 dargestellten Dosierkopf von unten,
- Figur 3: eine Detailzeichnung des in Figur 1 dargestellten Dosierkopfes und
- Figur 4: eine vollständige Dosiervorrichtung in schematischer Darstellung.

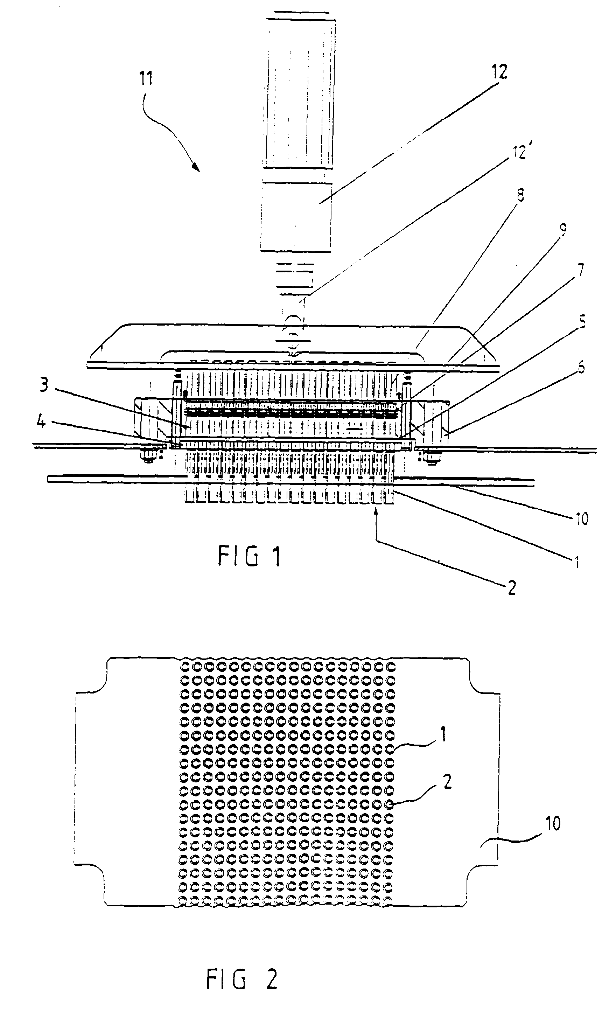

Wie der Figur 1 entnommen werden kann, sind rohrförmige Behälter 1 in eine Tüllenplatte 4 eingeschraubt. An dem der Tüllenplatte 4 abgewandten Ende weisen die rohrförmigen Behälter 1 Abgabeöffnungen 2 auf. Oberhalb der Tüllenplatte 4 befindet sich eine Kolbenplatte 6. Die Kolbenplatte 6 weist Bohrungen 3 auf, welche mit den Bohrungen der Tüllenplatte 4, in welche die rohrförmigen Behälter 1 geschraubt sind, korrespondieren. In den Bohrungen 3 der Kolbenplatte 6 sind Kolben 7 mit Kolbenstangen 8 angeordnet. Ein Kolben 7 mit seiner Kolbenstange 8 bildet mit der entsprechenden Bohrung 3 eine Kolbenpumpe.

Zwischen der Kolbenplatte 6 und der Tüllenplatte 4 ist eine Dichtung 5 angeordnet. Durch die Dichtung 5 wird erreicht, daß der durch die Kolbenpumpen erzeugbare Unterdruck ohne Verluste auf die rohrförmigen Behälter 1 übertragen wird.

Die Kolbenstangen 8 sind an ihren den Kolben 7 abgewandten Enden mit einer Mitnehmerplatte 9 verbunden. Die Mitnehmerplatte 9 ist mit einer Kolbenstange 12' eines als Linearantrieb dienenden Zylinders 12 verbunden.

Die rohrförmigen Behälter 1 erstrecken sich durch Öffnungen einer Abstreiferplatte 10. Die Öffnungen der Abstreiferplatte 10 sind geringfügig größer als die Außenabmessungen der rohrförmigen Behälter 1. Hierdurch lassen sich die rohrförmigen Behälter 1 zwar durch die Öffnungen der Abstreiferplatte 10 schieben, jedoch ist der Spalt zwischen den rohrförmigen Behältern 1 und den Öffnungen der Abstreiferplatte 10 so gering, daß an den Außenwänden der rohrförmigen Behälter 1 haftendes erstes Produkt vollständig abgestreift wird. Die in Figur 1 dargestellte Anordnung bildet einen Dosierkopf 11.

Wie der Figur 2 entnommen werden kann, sind die rohrförmigen Behälter 1 in Form einer Matrix angeordnet. Wenngleich in Figur 2 auch in alle Öffnungen der Tüllenplatte 4 rohrförmige Behälter 1 eingeschraubt sind, so läßt sich die Tüllenplatte 4 individuell mit rohrförmigen Behältern 1 bestücken. Beispielsweise könnten die rohrförmigen Behälter 1 auch so angeordnet sein, daß sich eine kreisförmige Fläche oder ein Oval ergibt.

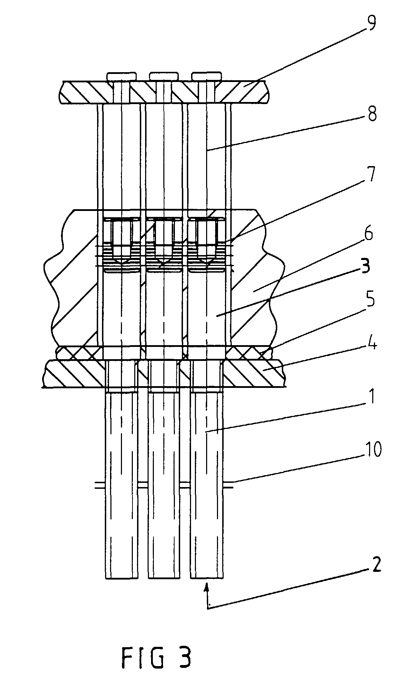

Zur besseren Darstellbarkeit wurde in Figur 3 ein Ausschnitt der Figur 1 vergrößert wiedergegeben. Die Bezugszeichen wurden unverändert beibehalten.

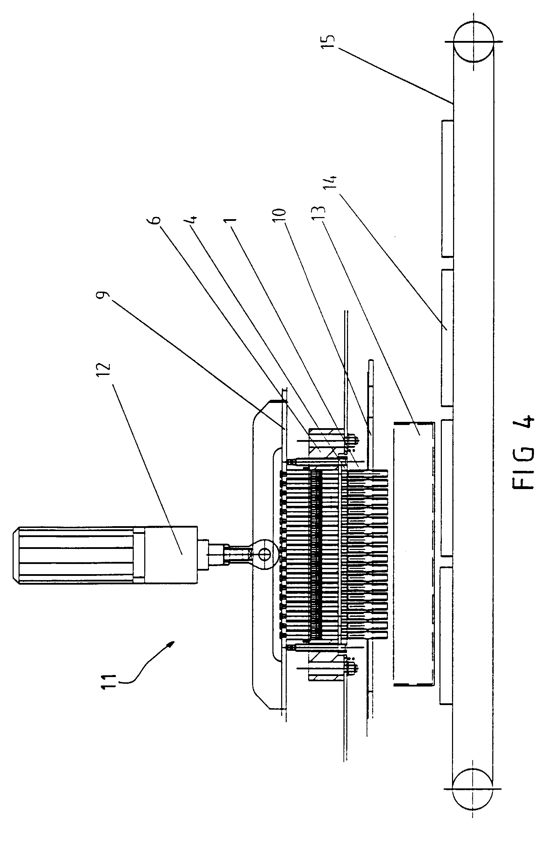

Bei der in Figur 4 wiedergegebenen vollständigen Dosiervorrichtung sind mehrere Dosierköpfe 11 nebeneinander angeordnet, wobei nur der vordere Dosierkopf 11 zu sehen ist. Die Bezugszeichen stimmen mit den in Figur 1 verwendeten Bezugszeichen überein.

Wie der Figur 4 entnommen werden kann, ist unterhalb eines Dosierkopfes 11 eine Wanne 13 angeordnet, in welcher das zu dosierende erste Produkt enthalten ist. Neben der Wanne 13 ist ein Förderband 15 angeordnet, auf welchem sich zweite Produkte 14 befinden, auf welche das erste Produkt aufgebracht werden soll. Die Dosierköpfe 11 sind an einer nicht gezeigten Vorrichtung verschiebbar befestigt. Mittels der nicht gezeigten Vorrichtung lassen sich die Dosierköpfe 11 über das Fließband 15 schieben. Des weiteren können die Dosierköpfe 11 mit der gleichen Geschwindigkeit wie die zweiten Produkte 14 über dem Fließband 15 verschoben werden.

Die Dosierköpfe 11 können entsprechend der Produktgeometrie und Fördergeschwindigkeit der zweiten Produkte angeordnet werden. Steht der Dosierkopf 11 in seiner Ausgangsposition, befindet sich unter ihm die Wanne 13 mit dem zu dosierenden ersten Produkt. Durch einen nicht gezeigten Linearantrieb läßt sich der gesamte Dosierkopf 11 senkrecht bewegen. Mittels des Linearantriebs können die Abgabeöffnungen 2 der ersten Behälter 1 in das sich in der Wanne 13 befindliche erste Produkt eingetaucht werden. Befinden sich die Abgabeöffnungen 2 der ersten Behälter 1 im ersten Produkt, so wird mittels des Zylinders 12 die Mitnehmerplatte 9 nach oben verschoben, wodurch die Kolben 7 in den Bohrungen 3 einen Unterdruck erzeugen, der sich auf die ersten Behälter 1 überträgt. Durch den Unterdruck wird erstes Produkt in den Behälter 1 gesogen.

Nachdem sich die erforderliche Menge des ersten Produktes in den Behältern 1 befindet, wird der Zylinder 12 angehalten. Der gesamte Dosierkopf 11 wird mittels des nicht gezeigten Antriebs nach oben verschoben, wobei sich außen an den Behältern 1 befindliches erstes Produkt durch die Öffnungen der Abstreiferplatte 10 abgestreift wird. Nachdem der Dosierkopf 11 soweit nach oben verfahren wurde, daß sich die Abgabeöffnungen 2 der ersten Behälter 1 oberhalb der Abstreiferplatte 10 befinden, wird der Dosierkopf 11 seitlich verschoben und über das Transportband 15 bewegt. Nachdem das zweite Produkt 14, auf das dosiert werden soll, von einem ebenfalls nicht gezeigten Sensor erkannt wurde, wird der Dosierkopf 11 entsprechend der Geschwindigkeit des Transportbandes 15 in eine Mitfahrbewegung versetzt. Danach wird mittels des Zylinders 12 die Mitnehmerplatte 9 und mit ihr die Kolben 7 nach unten geschoben, wodurch zum einen der Unterdruck in den Behältern 1 aufgehoben wird und darüber hinaus in den Behältern 1 ein Überdruck entsteht. Durch den Überdruck wird das erste Produkt aus den Behältern 1 auf das zweite Produkt 14 aufgebracht. Durch relativ schnelles Absenken der Kolben 7 kann das erste Produkt mit großer Geschwindigkeit von den Behältern 1 abgegeben werden, wodurch es sich sehr gleichmäßig auf dem zweiten Produkt 14 verteilt.

Durch Variation von Fallhöhe, Dosiergeschwindigkeit, Tüllengeometrie, Tüllenanordnung und Dosiermenge ergibt sich in Abhängigkeit der Beschaffenheit des zu dosierenden ersten Produkts ein Dosierbild, das von punktförmiger Anordnung bis zum geschlossenen Auftrag reicht.

## Patentansprüche

1. Vorrichtung zum Aufbringen eines ersten Produktes auf ein zweites Produkt (14), mit wenigsten einem das erste Produkt enthaltenden Behälter (1), welcher wenigstens eine Öffnung (2) zur Abgabe des ersten Produkts aufweist,
dadurch gekennzeichnet,
daß Elemente vorgesehen sind, welche jeweils eine Abgabeöffnung (2) für das erste Produkt aufweisen, welche in Form einer Matrix nebeneinander angeordnet sind.

2. Vorrichtung nach Anspruch 1,
dadurch gekennzeichnet,
daß die Elemente rohrförmig ausgebildete Behälter (1) sind.

3. Vorrichtung nach Anspruch 2,
dadurch gekennzeichnet,
daß die Behälter (1) an ihren den Abgabeöffnungen (2) abgewandten Enden mit einem Unterdruck beaufschlagbar sind.

4. Vorrichtung nach Anspruch 2 oder 3,
dadurch gekennzeichnet,
daß die Behälter (1) an ihren den Abgabeöffnungen (2) abgewandten Enden mit einer Kolbenpumpe (3, 7, 8) verbunden sind.

5. Vorrichtung nach einem der Ansprüche 2 bis 4,
dadurch gekennzeichnet,
daß eine Tüllenplatte (4) vorgesehen ist, an der die Behälter (1) mit ihrem den Abgabeöffnungen (2) abgewandten Enden befestigt sind.

6. Vorrichtung nach Anspruch 5,
dadurch gekennzeichnet,
daß die Kolbenpumpen (3, 7, 8) an der den Behältern (1) abgewandten Seite der über eine Dichtung (5) mit der Tüllenplatte (4) verbunden sind.

7. Vorrichtung nach einem der Ansprüche 4 bis 6,
dadurch gekennzeichnet,
daß die Kolbenpumpen (3, 7, 8) als Bohrungen (3) in einer Kolbenplatte (6) ausgebildet sind, in denen Kolben (7) mit einer Kolbenstange (8)angeordnet sind.

8. Vorrichtung nach einem der Ansprüche 4 bis 7,
dadurch gekennzeichnet,
daß die Kolbenstangen (8) an ihren den Kolben (7) abgewandten Enden mit einer Mitnehmerplatte (9) verbunden sind.

9. Vorrichtung nach einem der Ansprüche 2 bis 8,
dadurch gekennzeichnet,
daß eine Abstreiferplatte (10) vorgesehen ist, welche Öffnungen aufweist, welche geringfügig größer als die Behälter (1) sind und durch welche sich die Behälter (1) erstrecken.

10. Vorrichtung nach einem der Ansprüche 1 bis 9,
dadurch gekennzeichnet,
daß mehrere Elemente zu einem Dosierkopf (11) zusammengefaßt sind und die Vorrichtung mehrere Dosierköpfe (11) aufweist.
